Europäisches Patentamt

European Patent Office

Office européen des brevets

(19)

(11) Veröffentlichungsnummer: **0 037 964**
A1

## (12) EUROPÄISCHE PATENTANMELDUNG

(21) Anmeldenummer: **81102464.5**

(22) Anmeldetag: **01.04.81**

(51) Int. Cl.³: **C 03 B 37/16**

(30) Priorität: **10.04.80 DE 3013864**

(43) Veröffentlichungstag der Anmeldung: **21.10.81**
**Patentblatt 81/42**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Krause, Dieter, Ravensburger Ring 65, D-8000 München 65 (DE)**

(54) Vorrichtung zum Trennen von mehreren in einem Kabel vereinigten Lichtwellenleitern.

(57) Die Erfindung betrifft eine Vorrichtung zum Trennen von mehreren in einem Kabel vereinigten Lichtwellenleitern, bei der die festgeklemmten Lichtwellenleiter auf eine entsprechend geformte Unterlage aufgelegt und mit Hilfe einer Ritzvorrichtung geritzt und nach dem Ritzen durch Krafteinwirkung getrennt werden. Der Trennvorgang wird in einfacher Weise dadurch bewerkstelligt, daß die geritzten Lichtwellenleiter (5) mit Hilfe von Klemmvorrichtungen (1, 2) zu beiden Seiten der Trennstelle festgeklemmt und durch Schwenken einer der beiden Klemmvorrichtungen um eine durch die Trennebene gehende Schwenkachse (15) bis zum selbständigen Bruch gebogen werden.

SIEMENS AKTIENGESELLSCHAFT     Unser Zeichen
Berlin und München            VPA 80 P 7042 E

Vorrichtung zum Trennen von mehreren in einem Kabel
vereinigten Lichtwellenleitern

Die Erfindung bezieht sich auf eine Vorrichtung zum
Trennen von mehreren in einem Kabel vereinigten Lichtwellenleitern, bei der die vorzugsweise zu beiden Seiten
der Trennstelle festgeklemmten Lichtwellenleiter auf eine
entsprechend geformte Unterlage aufgelegt und mit Hilfe
einer senkrecht zu den Lichtwellenleitern beweglichen
Ritzvorrichtung geritzt und nach dem Ritzen durch Krafteinwirkung getrennt werden.

Es ist bereits eine Vorrichtung vorgeschlagen worden
(Patentanmeldung P 2 925 070, VPA 79 P 7082), bei der
die Lichtwellenleiter an der zu trennenden Stelle
parallel über einen Amboß geführt und gemeinsam vorgespannt werden, dann durch senkrechten Druck auf die
einzelnen Lichtwellenleiter in der Nähe des Ambosses
eine genau definierte Axialzugspannung in den Lichtwellenleitern eingestellt wird und anschließend die
einzelnen Lichtwellenleiter auf dem Amboß in senkrechter
Richtung geritzt werden. Damit können mehrere in einem
Kabel vereinigte Lichtwellenleiter mit hinreichender
Genauigkeit in einem Arbeitsgang getrennt werden. Diese
Vorrichtung erfordert jedoch einen nicht unerheblichen
Aufwand, da jeder einzelne Lichtwellenleiter mit Hilfe
von Druckbolzen vorgespannt wird.

Der Erfindung liegt die Aufgabe zugrunde, eine Vorrichtung
zum Trennen von mehreren in einem Kabel vereinigten Lichtwellenleitern zu schaffen, die einfach im Aufbau und in

Hs 1 Kow / 26.3.1980

0037964

der Handhabung ist. Diese Aufgabe wird gemäß der Erfindung dadurch gelöst, daß die geritzten Lichtwellenleiter mit Hilfe von Klemmvorrichtungen zu beiden Seiten der Trennstelle festgeklemmt und durch Schwenken zumindest einer der beiden Klemmvorrichtungen um eine durch die Trennebene gehende Schwenkachse bis zum selbständigen Bruch gebogen werden.

Anhand der Zeichnung, in der zwei Ausführungsbeispiele schematisch dargestellt sind, wird die Erfindung näher erläutert. Es zeigen:

Figur 1 eine Vorrichtung im Prinzip,
Figur 2 die der Vorrichtung entnommenen Klemmvorrichtungen
        im Schnitt und
Figur 3 ein weiteres Ausführungsbeispiel im Prinzip.

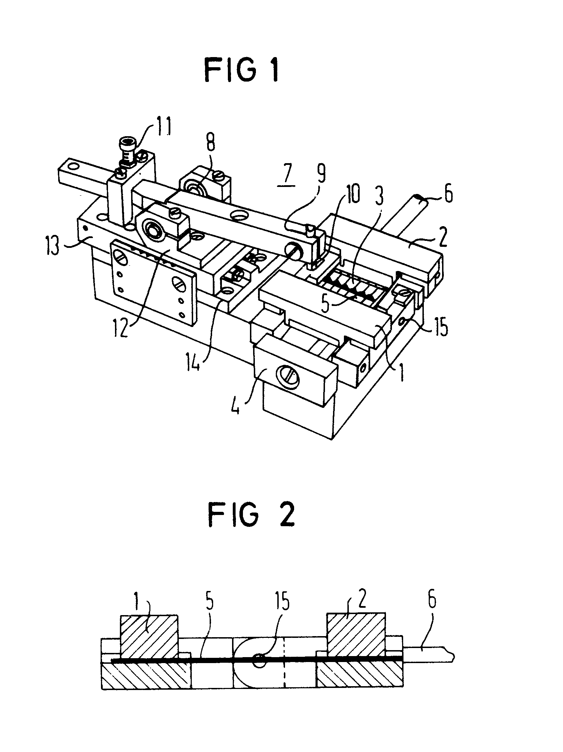

Die in Figur 1 dargestellte Vorrichtung besteht im Prinzip aus den beiden Klemmvorrichtungen 1 und 2, die zu beiden Seiten der Trennstelle in gleichem Abstand voneinander angeordnet sind. Mit Hilfe der Klemmvorrichtungen 1 und 2 werden die in dreieckförmigen Nuten 3 einer Unterlage 4 eingelegten Lichtwellenleiter 5 eines Mehrfachkabels 6 parallel zueinander geführt und mit Hilfe einer Ritzvorrichtung 7 in der Trennebene geritzt. Die Ritzvorrichtung 7 besteht aus einem um eine Schwenkachse 8 beweglichen Hebel 9, der an seinem vorderen Ende einen Schneiddiamanten 10 trägt und an seinem anderen Ende zur Begrenzung seiner Hubbewegung mit einer Anschlagschraube 11 versehen ist. Die Schwenkachse 8 ist in einem Lagerbock 12 gelagert, der auf einem Schlitten 13 befestigt ist, welcher auf einer Führung 14 gleitet.

Zum Ritzen der in den dreieckförmigen Nuten 3 eingelegten Lichtwellenleiter 5 wird der Schneiddiamant 10 mit Hilfe des Schlittens 13 senkrecht zu den Lichtwellenleitern 5 bewegt, welche an ihrem Umfang partiell mit definierter Kraft eingeschnitten werden. Nach dem Ritzen sämtlicher Lichtwellenleiter wird die Ritzvorrichtung 7 wieder in ihre Ausgangsstelle gemäß Figur 1 zurückgebracht. Anschließend werden die über Gelenke 15 miteinander verbundenen Klemmvorrichtungen 1 und 2 mit den geritzten und festgeklemmten Lichtwellenleitern 5 von der Unterlage 4 abgehoben und um die Drehachse der Gelenke 15 verschwenkt, wodurch die einzelnen Lichtwellenleiter 5 einer reinen Biegespannung unterworfen werden.

Figur 2 zeigt die von der Unterlage abgehobenen Klemmvorrichtungen 1 und 2 im Schnitt. Der Biegevorgang wird solange fortgesetzt, bis die Trennung sämtlicher Lichtwellenleiter 5 erfolgt ist. Die Trennung erfolgt hierbei durch eine reine Biegebeanspruchung, die nur in der eingeschnittenen Randzone der Lichtwellenleiter eine hohe Zugspannung erzeugt. Dieser Spannungszustand wird auch während der Trennphase selbständig aufrechterhalten, wodurch eine glatte und senkrechte Bruchfläche erzielt wird.

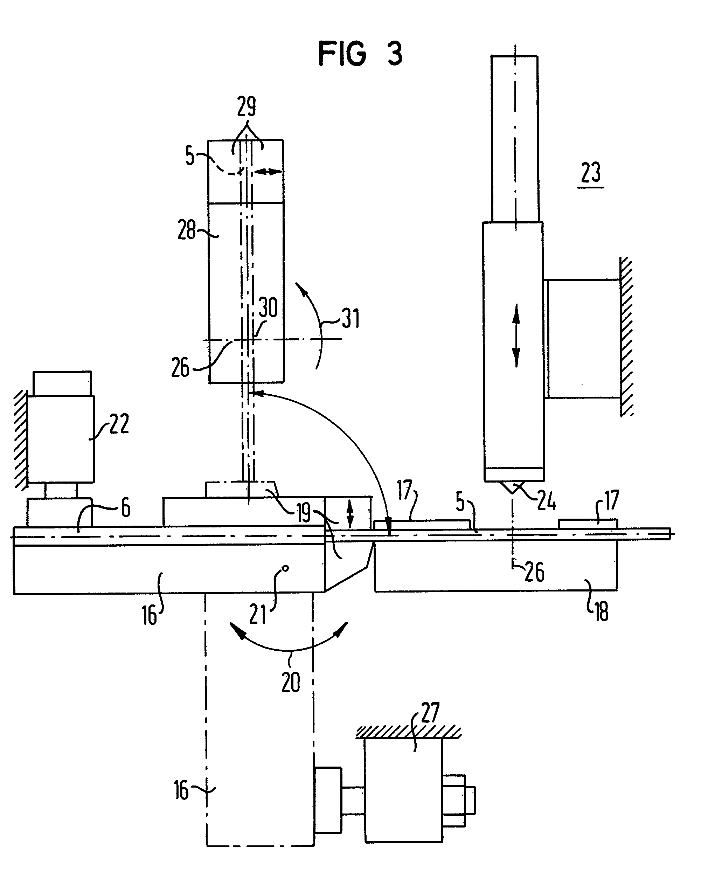

Figur 3 zeigt ein anderes Ausführungsbeispiel der Trennvorrichtung, wobei wirkungsmäßig gleiche Teile mit gleichen Bezugsziffern wie in Figur 1 versehen sind. Eine schwenkbare Klemmvorrichtung 16 nimmt ein Mehrfachkanal 6 auf, dessen einzelne Lichtwellenleiter 5 in der in Figur 3 dargestellten Lage in V-förmigen Nuten 17 einer Auflage 18 abgelegt sind. Mit Hilfe von Spannbacken 19 werden die einzelnen Lichtwellenleiter 5 festgeklemmt. Die Klemmvorrichtung 16 ist um einen Drehpunkt 21 schwenkbar, wobei die horizontale Schwenkbewegung (Pfeil 20) durch einen verstellbaren Anschlag 22 begrenzt ist. Mit 23 ist eine in der Höhe verstellbare Ritzvorrichtung bezeichnet, die am unteren Ende einen Schneiddiamanten 24 trägt. Nach dem Einlegen der Lichtwellenleiter 5 führt

0037964

80 P 7042 E

die Ritzvorrichtung eine Bewegung senkrecht zu den Lichtwellenleitern aus, wobei der Diamant 24 die einzelnen
Lichtwellenleiter in der Trennebene 26 ritzt. Nach dem
Ritzen der einzelnen Lichtwellenleiter 5 wird die Ritzvorrichtung 23 unter Anheben in ihre Ausgangsstellung
zurückgeführt und die Klemmvorrichtung 16 hochgeschwenkt,
wie mit strichpunktierten Linien angedeutet ist. Ein Anschlag 27 begrenzt diese Bewegung. Die hochgeschwenkten
Lichtwellenleiter 5 werden mit Hilfe einer weiteren
Klemmvorrichtung 28 am Ende mit Hilfe der Spannbacken
29 festgeklemmt. Die Klemmvorrichtung 28 ist um eine
Drehachse 30 schwenkbar, welche in der Trennebene 26
liegt. Wird nun die Klemmvorrichtung 28 in Richtung des
Pfeiles 31 verschwenkt, so wird auf die Trennstelle eine
reine Zugspannung ausgeübt, die zum Bruch der einzelnen
Lichtwellenleiter führt.


3 Patentansprüche
3 Figuren

Patentansprüche

1. Vorrichtung zum Trennen von mehreren in einem Kabel vereinigten Lichtwellenleitern, bei der die vorzugsweise zu beiden Seiten der Trennstelle festgeklemmten Lichtwellenleiter auf eine entsprechend geformte Unterlage aufgelegt und mit Hilfe einer senkrecht zu den Lichtwellenleitern beweglichen Ritzvorrichtung geritzt und nach dem Ritzen durch Krafteinwirkung getrennt werden, dadurch g e k e n n z e i c h n e t , daß die geritzten und mit Hilfe von Klemmvorrichtungen (1, 2 bzw. 19, 29) zu beiden Seiten der Trennstelle festgeklemmten Lichtwellenleiter (5) durch Schwenken zumindest einer der beiden Klemmvorrichtungen (1, 2 bzw. 19, 29) um eine durch die Trennebene (26) gehende Schwenkachse (15, 30) bis zum selbständigen Bruch gebogen werden.

2. Vorrichtung nach Anspruch 1, dadurch g e k e n n z e i c h n e t , daß die zu beiden Seiten der Trennstelle angeordneten Klemmvorrichtungen (1, 2 bzw. 19,29) im gleichen Abstand von der Trennebene angeordnet sind.

3. Vorrichtung nach Anspruch 1 oder 2, dadurch g e - k e n n z e i c h n e t , daß die in der Trennebene liegende Schwenkachse (15, 30) durch die Mitte der Lichtwellenleiter (5) geht.

FIG 1

FIG 2

0037964

# FIG 3

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | C 03 B 37/16 |
| A | US - A - 3 981 422 (MOORE) | | |
| A | US - A - 4 017 013 (HAWK) | | |
| | -------- | | |

| RECHERCHIERTE SACHGEBIETE (Int. Cl.) |
|---|
| C 03 B 37/16 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02.07.1981 | VAN DEN BOSSCHE |

EPA form 1503.1   06.78